# EUROPÄISCHE PATENTSCHRIFT

(11) **EP 2 406 108 B1**
(45) Veröffentlichungstag und Bekanntmachung des Hinweises auf die Patenterteilung: **24.10.2012**
(21) Anmeldenummer: 09805916.5
(22) Anmeldetag: 07.12.2009
(51) Int. Cl.: B60R 13/08, F02B 77/11

(54) **TEMPERATUR-SCHWINGUNGSENTKOPPELELEMENT**
TEMPERATURE OSCILLATION DECOUPLING ELEMENT
ÉLÉMENT ASSURANT UNE ISOLATION VIS-À-VIS DE LA CHALEUR ET DES VIBRATIONS

(30) Priorität: 09.03.2009 DE 102009012383
(43) Veröffentlichungstag der Anmeldung: 18.01.2012
(73) Patentinhaber: Federal-Mogul Sealing Systems Gmbh, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2009/008725
(87) Internationale Veröffentlichungsnummer: WO 2010/102656

(56) Entgegenhaltungen:
- EP-A1- 1 528 231
- WO-A1-2006/099913
- DE-A1- 19 716 733
- US-A1- 2005 040 576
- US-A1- 2006 219 860

## Beschreibung

### GEBIET DER ERFINDUNG

Die vorliegende Erfindung betrifft eine Abschirmvorrichtung mit einem Abschirmelement, das zur thermischen und akustischen Abschirmung von Bauteilen einer Verbrennungskraftmaschine verwendet werden kann. Insbesondere betrifft die vorliegende Erfindung eine Befestigung der Abschirmvorrichtung, bei welcher eine Wärme-, Schall- und Schwingungsübertragung von heißen, lauten und schwingenden Bauteilen im Motorraum oder Unterbodenbereich auf eine Karosserie entkoppelt ist.

### STAND DER TECHNIK

Abschirmelemente werden vielseitig eingesetzt. Spezielle Anwendungen von Abschirmelementen findet man insbesondere in der Kraftfahrzeugindustrie, wo Abschirmelemente als Hitzeschilder eingesetzt werden, um beispielsweise Passagiere oder Bauteile vor im Motor erzeugter Wärme und Geräuschentwicklung zu schützen. Solche Bauteile sind hauptsächlich Bestandteile der Auspuffanlage, wie Katalysatoren, Auspuffkrümmer, Turbolader und dergleichen. Die Abschirmelemente sollen die hohen Temperaturen und den durch auftretende Schwingungen entstehenden Schall von dem Innenraum des Fahrzeugs abschirmen. Um die immer strengeren Vorschriften hinsichtlich des Außenschallpegels von Fahrzeugen zu erfüllen, sollen die Abschirmelemente Geräusche zu einem hohen Grad absorbieren.

Für derartige Anwendungen müssen die Abschirmelemente fest und starr genug sein, um bei hohen Belastungen ihre Form zu behalten und darüber hinaus Passagiere von einem wesentlichen Teil der erzeugten Wärme und Schwingung zu schützen.

Die Verwendung eines einfachen Metallblattes, wie beispielsweise aus Aluminium oder aus einer Legierung, reicht dabei oft nicht aus, da ein derartiges Metallblatt zwar InfrarotStrahlung und die Konvektion reduzieren kann, jedoch weist es beispielsweise zu geringe akustische Dämmungseigenschaften auf.

Darüber hinaus weisen die im Stand der Technik erwähnten Abschirmelemente die ungünstige Eigenschaft auf, dass sie Wärmestrahlung, Schallwellen und Schwingungen, welche vom Abschirmelement aufgenommen werden, beispielsweise an die Befestigungspunkte der Karosserie weiterleiten und somit letztendlich auf die Karosserie des Fahrzeuges übertragen, wodurch Passagiere und wärmeempfindliche Teile des Fahrzeuges nicht mehr optimal geschützt sind.

Ein derartiges Abschirmelement wird beispielsweise in der EP 0 917 507 B offenbart. Dabei wird ein Verfahren zum Herstellen einer wärmedämmenden Verbundplatte offenbart. Die Aufgabe der Begrenzung der Wärme-, Schall- und Schwingungs-Weiterleitung an die die Verbundplatte umgebenden Bauteile wird dabei allerdings nicht behandelt.

Auch die- DE 43 29 411 C2 beschäftigt sich mit einem Wärme-, Schall- und Schwingungsdämmungs-Material sowie einem Verfahren für dessen Herstellung. Dabei wird ein Wärme-, Schall- und Schwingungsdämmungs-Material offenbart, welches aus mehreren aufeinander liegenden profilierten Folien aus Nichteisenmetall, insbesondere Aluminium, besteht.

Das Dokument US 2006/0219860 A1 zeigt weiterhin eine Abschirmvorrichtung gemäß des Obergriffs des Anspruches 1.

Das Material ist als Industrie-Isolierung sowie als Hitzeschutzschild im Kraftfahrzeug- und Waggonbau einsetzbar. Das Problem der hinreichenden Eindämmung der Wärme-, Schall- und Schwingungs-Weiterleitung an die die Verbundplatte umgebenden Bauteile wird auch dabei nicht gelöst. Ferner wird eine isolierende Wirkung nur durch die Abschirmelemente selbst erreicht, wobei die Befestigungspunkte des Abschirmelements and dem abzuschirmenden Bauteil hohen thermischen und mechanischen Belastungen ausgesetzt sind.

### ZUSAMMENFASSUNG DER ERFINDUNG

Aufgabe der vorliegenden Erfindung ist es daher, eine Abschirmvorrichtung für Bauteile einer Verbrennungskraftmaschine, und insbesondere von Kraftfahrzeugen, bereitzustellen, die einfach hergestellt und montiert werden kann und die darüber hinaus an den Befestigungspunkten des Abschirmelements eine Wärme-, Schall- und Schwingungsübertragung von heißen, lauten und schwingenden Bauteilen im Motorraum oder Unterbodenbereich auf eine Karosserie entkoppelt.

Zur Lösung der Aufgabe lehrt die vorliegende Erfindung, eine Abschirmvorrichtung entsprechend den Mphk des Anspruches 1 aus zu bilden.

Durch den erfindungsgemäßen Aufbau der Abschirmvorrichtung wird sicher gestellt, dass das Abschirmelement nicht mehr direkt mit dem abzuschirmenden Bauteil in Verbindung steht. Eine direkte Wärme-, Schall- und Schwingungsübertragung vom Bauteil in das Abschirmelement wird stark verringert. Eine Übertragung der thermischen Ausdehnungen des heißen Bauteils wird über die Flexibilität des Rings aus Metalldraht ebenfalls ausgeglichen bzw. verringert.

Über den Distanzring können Kräfte des Befestigungsmittels, beispielsweise einer Schraube, aufgenommen werden, wodurch ein vollständiges Zusammenpressen des Rings aus Metalldraht beim Befestigen der Abschirmvorrichtung an dem abzuschirmenden Bauteil verhindert wird. Variierung der Höhe des Distanzrings ermöglicht ferner ein Einstellen der auf den Ring aus Metalldraht wirkenden Vorspannung, wodurch eine Übertragung unterschiedlicher Schwingungsfrequenzen verringert werden kann.

Die vorstehende Wirkung kann ebenfalls durch geeignete Auswahl des Materials des Rings aus Metalldraht, sowie durch die Dichte und/oder Dicke des Drahtgeflechts erzielt werden.

Als Abschirmelement können jegliche im Stand der Technik bekannte Elemente verwendet werden, die eine geeignete akustische, mechanische und/oder thermische Abschirmung gewährleisten. Das Abschirmelement weist vorzugsweise zwei, drei, vier, fünf, oder mehr erste Durchgangsöffnungen auf, in welchen jeweils ein Ring aus Metalldrahtgeflecht mit einer zentral angeordneten zweiten Durchgangsöffnung in der ersten Durchgangsöffnung und der ersten Seite des Abschirmelements eingepasst vorliegt. Darüber hinaus liegt ein Distanzring in der zweiten Durchgangsöffnung und der zweiten Seite des Abschirmelements eingepasst vor. Somit können an dem Abschirmelement weitere Befestigungspunkte festgelegt sein.

Zur thermischen Abschirmung kann beispielsweise eine Lage aus Edelstahl (z. B: Werkstoffnummern 1.4512 oder 1.4509) oder Aluminium verwendet werden, die eine Stärke von 0,15 bis 0,30 mm, vorzugsweise von 0,20 bis 0,25 mm aufweist. Allerdings können auch Kombinationen verschiedener Materiallagen als Abschirmelement eingesetzt werden.

Der Ring aus Metalldrahtgeflecht sowie der Distanzring können ebenfalls aus Edelstahl (z. B: Werkstoffnummern 1.4512 oder 1.4509) bestehen.

Gemäß einer bevorzugten Ausführungsform ist der Distanzring als Befestigungselement an einem abzuschirmenden Gegenstand ausgebildet. Im Fall einer Befestigung der Abschirmvorrichtung an einem abzuschirmenden Bauteil stellt die erste Seite des Abschirmelements die dem Bauteil abgewandte Seite dar, wohingegen die zweite Seite des Abschirmelements dem Bauteil zugewandt ist. Die Befestigung kann direkt über den Distanzring erfolgen, beispielsweise mittels einer daran angeordneten Steckverbindung, die eine Verbindung mit dem abzuschirmenden Bauteil erlaubt.

Gemäß einer weiteren Ausführungsform weist der Distanzring eine zentral ausgebildete dritte Durchgangsöffnung aufweist, die beispielsweise ein Verschrauben oder eine Befestigung mit Nieten an dem abzuschirmenden Bauteil ermöglicht. Die Befestigung erfolgt vorzugsweise mittels Schrauben, da dadurch auf einfache Weise die auf den Ring aus Metalldraht wirkende Vorspannung eingestellt werden kann und somit eine einfache Einstellung der zu unterdrückenden Schwingungsfrequenzen ermöglicht. Beispielsweise kann ein Mechaniker mit Hilfe eines herkömmlichen akustischen Messgeräts besonders als störend empfundene Schwingungsfrequenzen durch geeignete Einstellung des Befestigungselements verringern oder gänzlich beseitigen.

Gemäß einer anderen Ausführungsform ist das Befestigungsmittel nach Einstellung einer erwünschten Vorspannung an der Abschirmvorrichtung derart an beispielsweise dem Distanzring gesichert, dass ein Lösen des Befestigungsmittels durch beispielsweise Vibrationen vermieden werden kann.

Das Abschirmelement weist mindestens ein Befestigungselement für ein Anbringen an dem Ring aus Metalldrahtgeflecht auf, beispielsweise ausgebildet als Stehbolzen mit zugehöriger Mutter. Das mindestens eine Befestigungselement ist in Form einer Materialdurchstoßung auf einem Teilkreisdurchmesser der zweiten Seite des Abschirmelements ausgebildet. Der Teilkreisdurchmesser ist hierbei größer als der Durchmesser des Rings aus Metalldrahtgeflecht. Die Verwendung einer nasenförmigen Materialdurchstoßung ermöglicht nach deren Umbiegen ein Sichern des Rings aus Metalldraht an dem Abschirmelement.

Gemäß einer weiteren Ausführungsform liegen mindestens drei Befestigungselemente vor.

Gemäß einer bevorzugten Ausführungsform weist das Metall des Metalldrahtgeflechts eine geringe Wärmeleitfähigkeit und hohe Elastizität auf. Edelstahl (z. B: Werkstoffnummern 1.4512 oder 1.4509) ist ein für den Verbau in Kraftfahrzeugen geeignetes Material, um Bauteile wie Katalysatoren, Auspuffkrümmer, Turbolader und dergleichen geeignet abzuschirmen.

Gemäß einer weiteren Ausführungsform weist die erste Durchgangsöffnung einen Durchmesser von 0,25 - 1 cm, bevorzugt von 0,4 - 0,6 cm, mehr bevorzugt von 0,4 - 0,5 cm auf.

Gemäß einer Ausführungsform weist die zweite Durchgangsöffnung einen geringeren Durchmesser auf als der der ersten Durchgangsöffnung. Bevorzugte Durchmesser der zweiten Durchgangsöffnung sind 0,15 - 0,9 cm, bevorzugt von 0,3 - 0,5 cm, mehr bevorzugt von 0,3 - 0,4 cm auf.

Gemäß einer weiteren Ausführungsform weist die dritte Durchgangsöffnung einen geringeren Durchmesser auf als der der zweiten Durchgangsöffnung. Bevorzugte Durchmesser der zweiten Durchgangsöffnung sind 0,1 - 0,8 cm, bevorzugt von 0,2 - 0,6 cm, mehr bevorzugt von 0,25 - 0,35 cm auf.

Im Folgenden wird die vorliegende Erfindung unter Bezug auf die beigefügten Zeichnungen detaillierter erläutert werden, wobei
Fig. 1 eine Ausführungsform der vorliegenden Erfindung im Querschnitt zeigt; und
Fig. 2 eine Draufsicht auf die erste Seite des Abschirmelements der in Fig. 1 gezeigten Ausführungsform.

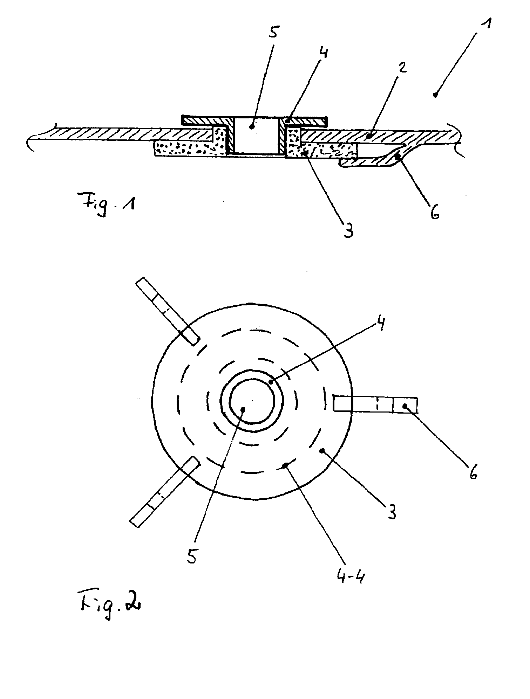

In Figur 1 ist eine Ausführungsform der erfindungsgemäßen Abschirmvorrichtung 1 in einer Querschnittsansicht gezeigt, die zur Abschirmung eines Bauteils einer Verbrennungskraftmaschine (nicht gezeigt) angeordnet ist. Das Bauteil kann beispielsweise ein Turbolader, Katalysator oder anderes Bauteil sein, welches im Betrieb heiß wird, also eine Wärmequelle darstellt. Mit der Wärmeabgabe ist häufig auch eine Schallabstrahlung verbunden, wie es etwa bei Schalldämpfern oder Turboladern der Fall ist.

Das verwendete Abschirmelement 2 besitzt eine Abschirmwirkung gegenüber Wärme- und Schallabstrahlung. Für Wärmestrahlung ist im Allgemeinen eine andere Art der Abschirmung erwünscht ist als für Schall. Während es bei der Wärmestrahlung wünschenswert ist, diese in einem möglichst großen Ausmaß zu reflektieren, d.h. an die Umwelt abzugeben, ist bei Schall genau der gegenteilige Effekt erwünscht. Schallwellen sollen nicht reflektiert werden, was die Außengeräusche des Fahrzeugs erhöht und auch in ungünstigen Fällen zu Resonanzen führen kann, sondern stattdessen möglichst vollständig absorbiert werden.

Das Abschirmelement 2 weist in der in Fig. 1 gezeigten Ausführungsform eine erste Durchgangsöffnung auf, in welche der Ring aus Metalldraht 3 derart eingepasst ist, dass der Kragen des L-förmigen Querschnitts mit der zweiten Seite des Abschirmelements ggf. über einen Steg abschließt. Das Abschirmelement 2 weist ein Befestigungselement in Form einer nasenförmigen Materialdurchstoßung 6 auf, die zum Fixieren des Rings aus Metalldraht 3 an dem Abschirmelement 2 vorgesehen ist. Durch Umlegen der Materialdurchstoßung 6 wird der Ring aus Metalldraht 3 an dem Abschirmelement 2 gesichert. In der im Zentrum des Rings aus Metalldraht 3 angeordneten zweiten Durchgangsöffnung ist ein Distanzring 4 angeordnet. Der Kragen des Distanzrings sollte vorzugsweise nicht mit der dem Bauteil zugewandten/anliegenden Fläche des Rings aus Metalldraht abschließen, um so eine Wärme-, Schwingungs- und Schallübertragung vom Bauteil durch das Material des Distanzrings zu reduzieren oder zu vermeiden. Der Distanzring 4 weist eine mittig angeordnete Durchgangsöffnung 5 auf, durch welche ein Befestigungselement zum Fixieren der Abschirmvorrichtung 1 an dem Bauteil eingefügt werden kann.

Die Figur 2 zeigt eine Draufsicht auf die erste Seite des Abschirmelements 2. Die äußere Umrandung des Distanzrings 4 wird mit gestrichelter Line 4-4 gezeigt. Der Ring aus Metalldraht 3 stellt die Kontaktfläche zum Bauteil dar und ist mit drei Befestigungselementen an einem Abschirmelement gesichert. In dem Ring aus Metalldraht 3 werden einerseits (mechanische) Schallwellen durch Reibung in Wärme umgewandelt, andererseits wird durch den Ring aus Metalldraht 3 (elektromagnetische) Wärmestrahlung nur zu einem geringen Grad an das Abschirmelement 2 weitergeleitet.

Das Metalldrahtgeflecht des Rings aus Metalldraht 3 kann sowohl als regelmäßiges als auch als unregelmäßiges Maschenwerk ausgeführt sein, d.h. die Größe und Anordnung der Durchgangsöffnungen oder auch "Poren" ist entweder regelmäßig oder unregelmäßig. "Porosität" ist hierbei als die Gesamtfläche der Durchgangsöffnungen, bezogen auf die Gesamtfläche der Geflechtlage, zu verstehen. Das Maschenwerk ist durch seine Porosität (20 bis 30 %) in der Lage, auftreffende Schallwellen durch Reibung in Wärme umzuwandeln und somit zu dämpfen.

Hierbei können die regelmäßigen oder unregelmäßigen Abstände bzw. die Größe der Poren des Maschenwerkes je nach Frequenzbereich der abzuschirmenden Schallwellen ausgelegt werden. Eine zusätzliche Möglichkeit zur Beeinflussung der Porosität (Anpassung an unterschiedliche Frequenzen) des Maschenwerkes kann durch ein Flachwalzen oder Verpressen auf verschiedene Dicken des Maschenwerkes erfolgen, wodurch die Porosität verändert werden kann. Hierdurch kann außerdem eine zusätzliche Steifigkeit des Maschenwerkes erreicht werden.

Um die Korrosionsbeständigkeit des Maschenwerkes zu gewährleisten, ist es von Vorteil, das Maschenwerk zusätzlich mit Zink oder Aluminium zu beschichten. Maschenwerke aus Edelstahl benötigen keine solche Beschichtung.

Durch eine zusätzliche Beschichtung des Maschenwerkes kann außerdem die Reflektion der Wärme erhöht und die thermische Abschirmwirkung somit verbessert werden.

Vorzugsweise ist der Distanzring beschichtet.

## Patentansprüche

1. Abschirmvorrichtung (1), umfassend:
- ein Abschirmelement (2) mit mindestens einer ersten Durchgangsöffnung, einer ersten Seite und einer zweiten Seite;
- einen Ring aus Metalldrahtgeflecht (3) mit einer zentral ausgebildeten zweiten Durchgangsöffnung, wobei der Ring aus Metalldrahtgeflecht (3) einen L-förmigen Querschnitt zu der Durchgangsöffnung hin aufweist; und
- einen Distanzring (4), der einen L-förmigen Querschnitt zu dem Mittelpunkt des Distanzrings (4) hin aufweist;
wobei
- der Ring aus Metalldrahtgeflecht (3) in der ersten Durchgangsöffnung und der ersten Seite des Abschirmelements (2) eingepasst vorliegt;
- der Distanzring (4) in der zweiten Durchgangsöffnung und der zweiten Seite des Abschirmelements (2) eingepasst vorliegt; **dadurch gekennzeichnet dass**
- das Abschirmelement (2) mindestens ein Befestigungselement (6) für ein Anbringen an dem Ring aus Metalldrahtgeflecht (3) aufweist; und
- das mindestens eine Befestigungselement (6) in Form einer Materialdurchstoßung auf einem Teilkreisdurchmesser der zweiten Seite des Abschirmelements (2) vorliegt, wobei der Teilkreisdurchmesser größer als der Durchmesser des Rings aus Metalldrahtgeflecht ist.

2. Abschirmvorrichtung (1) gemäß Anspruch 1, worin der Distanzring (4) als Befestigungselement an einem abzuschirmenden Gegenstand ausgebildet ist.

3. Abschirmvorrichtung (1) gemäß Anspruch 2, worin der Distanzring (4) eine zentral ausgebildete dritte Durchgangsöffnung (5) aufweist, die zur Aufnahme Befestigungsmittels ausgebildet ist.

4. Abschirmvorrichtung (1) gemäß Anspruch 3, worin das Befestigungsmittel eine Schraube ist.

5. Abschirmvorrichtung (1) gemäß Anspruch 3, worin das Befestigungsmittel an dem Distanzring (4) gesichert ist.

6. Abschirmvorrichtung (1) gemäß einem der vorstehenden Ansprüche, worin 3 oder mehr Befestigungselemente vorliegen.

7. Abschirmvorrichtung (1) gemäß einem der vorstehenden Ansprüche, worin das Material des Rings aus Metalldraht (3) eine geringe Wärmeleitfähigkeit und hohe Elastizität aufweist.

8. Abschirmvorrichtung (1) gemäß einem der vorstehenden Ansprüche, worin die erste Durchgangsöffnung einen Durchmesser von 0,25 - 1 cm aufweist.

9. Abschirmvorrichtung (1) gemäß einem der vorstehenden Ansprüche, worin die zweite Durchgangsöffnung einen Durchmesser von 0,15 - 0,9 cm aufweist.

10. Abschirmvorrichtung (1) gemäß Anspruch 3, worin die dritte Durchgangsöffnung (5) einen Durchmesser von 0,15 - 0,9 cm aufweist.

## Claims

1. A shielding device (1), comprising:
- a shielding element (2) with at least a first through-opening, a first side and a second side;
- a ring made from metal wire mesh (3) with a centrally formed second through-opening; wherein the ring made from metal wire mesh (3) has an L-shaped cross-section towards the through-opening; and
- a spacer ring (4), which has an L-shaped cross-section towards the centre of the spacer ring (4);
wherein
- the wire metal mesh ring (3) is fitted in the first through-opening and the first side of the shielding element (2);
- the spacer ring (4) is fitted in the second through-opening and the second side of the shielding element (2); **characterized in that**
- the shielding element (2) exhibits at least one mounting element (6) for attachment to the metal wire mesh ring (3); and
- the at least one mounting element (6) takes the form of a punched hole in the material on a reference diameter of the second side of the shielding element (2), wherein the reference diameter is greater than the diameter of the metal wire mesh ring.

2. The shielding device (1) according to claim 1, wherein the spacer ring (4) is designed as a mounting element on an object being shielded.

3. The shielding device (1) according to claim 2, wherein the spacer ring (4) has a centrally formed third through-opening (5), which is designed to take the mounting means.

4. The shielding device (1) according to claim 3, wherein the mounting means is a screw.

5. The shielding device (1) according to claim 3, wherein the mounting means is secured to the spacer ring (4).

6. The shielding device (1) according to one of the preceding claims, wherein 3 or more mounting elements exist.

7. The shielding device (1) according to one of the preceding claims, wherein the material of the metal wire ring (3) exhibits low thermal conductivity and high elasticity.

8. The shielding device (1) according to one of the preceding claims, wherein the first through-opening has a diameter of 0.25 - 1 cm.

9. The shielding device (1) according to one of the preceding claims, wherein the second through-opening has a diameter of 0.15 - 0.9 cm.

10. The shielding device (1) according to claim 3, wherein the third through-opening (5) has a diameter of 0.15 - 0.9 cm.

## Revendications

1. Dispositif de blindage (1), comprenant :
- un élément de blindage (2), avec au moins une ouverture de passage, un premier côté et un deuxième côté ;
- une bague en treillis de fil métallique (3) avec une deuxième ouverture centrale, où la bague en treillis de fil métallique (3) présente une section transversale en forme de L en direction de l'ouverture de passage ; et
- une bague d'écartement (4) présentant une section transversale en forme de L en direction du point central de l'anneau d'écartement (4) ;
dans lequel
- la bague en treillis de fil métallique (3) est encastrée dans la première ouverture de passage et dans le premier côté de l'élément de blindage (2) ;
- la bague d'écartement (4) est encastrée dans la deuxième ouverture de passage et dans le deuxième côté de l'élément de blindage (2) ;
**caractérisé en ce que**
- l'élément de blindage (2) comporte au moins un élément de fixation (6) pour une fixation sur la bague en treillis de fil métallique (3) ; et
- l'au moins un élément de fixation (6) se présente sous la forme d'un perçage de matériau sur un diamètre d'arc de cercle du deuxième côté de l'élément de blindage (2), le diamètre d'arc de cercle étant supérieur au diamètre de la bague en treillis de fil métallique.

2. Dispositif de blindage (1) selon la revendication 1, dans lequel la bague d'écartement (4) est conçue comme un élément de fixation sur un objet à blinder.

3. Dispositif de blindage (1) selon la revendication 2, dans lequel la bague d'écartement (4) comporte une troisième ouverture de passage (5) centrale, conçue pour accueillir le moyen de fixation.

4. Dispositif de blindage (1) selon la revendication 3, dans lequel le moyen de fixation est une vis.

5. Dispositif de blindage (1) selon la revendication 3, dans lequel le moyen de fixation est fixé sur la bague d'écartement (4).

6. Dispositif de blindage (1) selon l'une des revendications précédentes, dans lequel il est prévu 3 éléments de fixation ou plus.

7. Dispositif de blindage (1) selon l'une des revendications précédentes, dans lequel le matériau de la bague en treillis de fil métallique (3) présente une faible conductibilité thermique et une forte élasticité.

8. Dispositif de blindage (1) selon l'une des revendications précédentes, dans lequel la première ouverture de passage présente un diamètre compris entre 0,25 et 1 cm.

9. Dispositif de blindage (1) selon l'une des revendications précédentes, dans lequel la deuxième ouverture de passage présente un diamètre compris entre 0,15 et 0,9 cm.

10. Dispositif de blindage (1) selon la revendication 3, dans lequel la troisième ouverture de passage (5) présente un diamètre compris entre 0,15 et 0,9 cm.
